(19) Europäisches Patentamt
European Patent Office
Office européen des brevets

(11) EP 1 208 392 B1

(12) **EUROPEAN PATENT SPECIFICATION**

(45) Date of publication and mention of the grant of the patent:
**22.09.2004 Bulletin 2004/39**

(21) Application number: **00956373.5**

(22) Date of filing: **01.08.2000**

(51) Int Cl.[7]: **G02B 1/04**, C08J 7/06

(86) International application number:
**PCT/EP2000/007444**

(87) International publication number:
**WO 2001/009645 (08.02.2001 Gazette 2001/06)**

(54) **PROCESS FOR THE MANUFACTURE OF A CROSSLINKED, TRANSPARENT, HYDROPHILIC AND PHOTOCHROMIC POLYMERIC MATERIAL, AND OPTICAL AND OPHTHALMIC ARTICLE OBTAINED**

VERFAHREN ZUR HERSTELLUNG VON VERNETZTEN,TRANSPARENTEN,HYDROPHILEN UND PHOTOCHROMEN KUNSTSTOFFMATERIALIEN UND OPTISCHEN UND OPTHALMISCHEN GEGENSTÄNDEN

PROCEDE DE FABRICATION DE POLYMERES RETICULES, TRANSPARENTS, HYDROPHILES ET PHOTOCHROMES ET D'ARTICLES D'OPTIQUE ET D'OPHTALMOLOGIE.

(84) Designated Contracting States:
**AT BE CH CY DE DK ES FI FR GB GR IE IT LI LU MC NL PT SE**

(30) Priority: **02.08.1999 FR 9910030**
**31.08.1999 US 386649**
**07.09.1999 US 391136**

(43) Date of publication of application:
**29.05.2002 Bulletin 2002/22**

(73) Proprietor: **ESSILOR INTERNATIONAL COMPAGNIE GENERALE D'OPTIQUE**
**94227 Charenton cédex (FR)**

(72) Inventors:
- **CALDERARA, Isabelle**
  **F-94000 Créteil (FR)**
- **NEYRAT, Véronique**
  **F-75014 Paris (FR)**
- **BAUDE, Dominique**
  **F-93400 St. Ouen (FR)**

(74) Representative: **Catherine, Alain et al**
**Cabinet Harlé & Phélip**
**7, rue de Madrid**
**75008 Paris (FR)**

(56) References cited:
**WO-A-95/32440**
**WO-A-96/04590**
**WO-A-97/41468**
**FR-A- 2 695 732**
**GB-A- 2 305 256**
**US-A- 4 681 412**
**US-A- 5 789 015**
**US-A- 5 851 585**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 208 392 B1

## Description

The invention generally relates to a process for the manufacture of crosslinked, transparent, hydrophilic and photochromic polymeric materials and to the use of the latter in the manufacture of optical and ophthalmic articles having photochromic properties and in particular contact lenses.

It is known to manufacture photochromic contact lenses by incorporation of a photochromic compound, such as a spirooxazine compound, in the mixture of polymerizable monomers resulting, after polymerization in a mould, in the final contact lens.

Thus, Patent Application WO 96/04590 discloses the manufacture of photochromic contact lenses made of methyl methacrylate (MMA) and N-vinylpyrrolidone (NVP) copolymer, which consists in introducing a spirooxazine compound into a mixture of MMA and NVP monomers, in the presence of alkyl methacrylate as crosslinking agent and of azobisisobutyronitrile (AIBN) as thermal initiator, and in subsequently thermally polymerizing the mixture.

This technique, commonly known as "cast in place", is also used in Patent EP-A-277,639, which discloses the incorporation, in a base monomeric mixture (in particular, based on hydroxyethyl methacrylate (HEMA), of a spirooxazine compound comprising an organic functional group which can be polymerized by addition or by ring opening. The mixture is subsequently polymerized. The photochromic compound, thus fixed within the material constituting the lens, is assumed not to be eluted in the lacrymal medium.

This "cast in place" process for the photochromic compounds exhibits numerous disadvantages.

Photochromic compounds are compounds which are sensitive to the action of the free radicals formed during the polymerization of mixtures of monomers by activation of the initiator. Under the effect of these free radicals, photochromic compounds, in particular spirooxazine compounds, are liable to decompose, generating coloured by-products. The result of this is, on the one hand, an overall decrease in the effectiveness of the photochromic compound, a portion of which has been destroyed, and, on the other hand, a permanent colouring brought about in the lens by these coloured by-products, which is not desired.

In addition, a significant disadvantage is that the by-products can exhibit a toxic nature, while, because of their low molar masses ; they can diffuse through the lens towards the eye of the wearer.

Thus, while this "cast in place" technique could be used with some success in the manufacture of ophthalmic glasses intended for spectacles, this does not apply in the production of contact lenses and, to the knowledge of the inventors, no photochromic hydrophilic contact lens has been marketed to date.

The possibly toxic nature of the by-products formed during the polymerization renders this "cast in place" technique virtually unusable in the case of contact lenses.

The fact that, in the "cast in place" process for the photochromic compound of Patent EP-A-277,639, the latter is fixed to the polymeric network constituting the contact lens is invalid with regard to the decomposition by-products.

Furthermore, the technique of Patent EP-A-277,639 limits the possible choice of the photochromic compounds which can be used.

The "cast in place" technique lacks flexibility at the industrial level insofar as it is impossible to render photochromic already existing lenses, which necessitates disposing of large stocks of photochromic contact lenses.

Finally, the "cast in place" technique does not make it possible to incorporate the photochromic compound in predetermined chosen regions of the lens.

In particular, hydrophilic contact lenses exhibit a diameter greater than that of the iris and it may be aesthetically advantageous to render photochromic just the central part of the contact lens covering the pupillary region of the eye of the wearer.

The object of the invention is therefore to provide a process for the production of crosslinked, transparent, hydrophilic and photochromic polymeric materials which solves the above problems, materials which make it possible to prepare photochromic contact lenses which are preferably resistant to the sterilization treatments, in particular thermal sterilization treatments, conventionally used.

According to the invention, the process for producing a crosslinked, transparent, hydrophilic and photochromic polymeric material comprises :

(a) dissolving a photochromic agent in a solvent or mixture of solvents capable of at least partially dissolving the photochromic agent, in order to obtain a photochromic impregnating solution;
(b) impregnating a crosslinked, transparent and hydrophilic polymeric material with the photochromic impregnating solution, in order to obtain a material impregnated with photochromic solution ;
(c) rinsing the impregnated material with an aqueous solution, in order to replace, with the aqueous solution, the solvent impregnated in the material ; and
(d) recovering the crosslinked, transparent, hydrophilic and photochromic polymeric material.

The process of the invention applies to any type of crosslinked, transparent and hydrophilic polymeric material

suitable for the manufacture of contact lenses.

In the context of the present invention, the term "hydrophilic material" is understood to mean any material having a degree of hydrophilicity of greater than or equal to 10 % and preferably of greater than or equal to 35 %.

Particularly preferred materials are those having a degree of hydrophilicity of 50 % or more.

As is conventional, the term "degree of hydrophilicity", or water content, is understood to mean the maximum percentage, by weight, of water which a polymeric material can fix.

The hydrophilic polymeric materials are generally obtained by polymerization, preferably in the presence of a crosslinking agent, of at least one of the following monomers :

hydroxyalkyl (meth)acrylates, alkoxy derivatives of hydroxyalkyl (meth)acrylates, aminoalkyl (meth)acrylates, monovinyl ethers, monovinyl polyethers, hydroxylated vinyl ethers, N-vinyllactams, amido derivatives of (meth) acrylic compounds, ionic monomers, zwitterionic monomers, oligomers of the above mentioned monomers and their mixtures.

The recommended hydroxyalkyl (meth)acrylates are those in which the alkyl group generally comprises from 1 to 4 carbon atoms.

Specific examples of hydroxyalkyl (meth)acrylate are 2-hydroxyethyl methacrylate (HEMA), hydroxypropyl acrylate, hydroxypropyl (meth)acrylate and 2,3-dihydroxypropyl methacrylate (glyceryl methacrylate).

The recommended alkoxy derivatives of hydroxyalkyl (meth)acrylates are the mono-, di- or triethoxylated compounds having an alkyl group generally comprising from 1 to 4 carbon atoms.

Mention may be made, among the monomers of the N-vinyllactam type, of N-vinyl-2-pyrrolidone (NVP), N-vinyl-2-piperidone and N-vinylcaprolactam.

Mention may be made, among the amido derivatives of (meth)acrylic compounds which are of use, of (meth) acrylamide, N-methyl(meth)acrylamide, N-isopropyl(meth)acrylamide, N-diacetone-(meth)acrylamide, N,N-dimethyl (meth)acrylamide, N,N-dimethylamino-methyl(meth)acrylamide, N,N-dimethylaminoethyl(meth)acrylamide and N-methylaminoisopropyl(meth)acrylamide. Mention may be made, among the aminoalkyl(meth)acrylates, of aminoethyl (meth)acrylate, dimethyl-aminoethyl methacrylate, methylaminoethyl methacrylate and diethylaminoethyl methacrylate.

Mention may be made, among the hydrophilic ionic monomers, of (meth)acrylic acid, as well as of cationic monomers, such as quaternary ammonium derivatives of (meth)acrylic acid.

Mention may be made, among the zwitterionic monomers, of those disclosed in Patent Application WO 92/07885. The latter monomers generally make it possible to reduce the affinity of the hydrogel with respect to the proteins in the lacrymal medium.

Examples of conventional crosslinking agents are ethylene glycol di(meth)acrylate, polyethylene glycol di (meth)acrylate, such as diethylene glycol di(meth)acrylate or triethylene glycol di(meth)acrylate, long-chain di(meth) acrylates, such as hexamethylene di(meth)acrylate, vinyl (meth)acrylate, allyl (meth)acrylate, divinylbenzene, diallyl phthalate and trimethylolpropane trimethacrylate.

These crosslinking agents are generally present in a concentration of 0.1 to 2 % by weight in the starting monomeric mixture resulting in the hydrophilic polymers which are used in the context of the invention.

The preferred hydrophilic polymeric materials are those obtained from vinyllactarn (including N-vinylpyrrolidone) and/or from N,N-dimethylacrylamide.

A preferred class of polymeric materials is composed of multiphase polymeric materials, in particular two-phase polymeric materials. Multiphase polymeric materials are materials in which the major part of the polymeric network is formed of distinctive microdomains (with a size generally of 0.005 to 0.25 µm) of two or more different materials.

Such networks are generally obtained by copolymerization of a mixture of monomers exhibiting reactive functional groups of different natures, for example by copolymerization of a (meth)acrylic or (meth)acrylamide monomer with an allylic or vinyl monomer.

The multiphase polymeric material is preferably formed by polymerization of a monomeric mixture comprising at least one hydrophobic monomer and one hydrophilic monomer.

The preferred hydrophobic monomers are $C_1$-$C_{10}$ alkyl (meth)acrylates, in particular methyl (meth)acrylate, and their fluorinated or silicone derivatives, ethoxyethyl methacrylate, cyclohexyl methacrylate, dimethyloxobutyl methacrylate, vinyl derivatives, such as styrene or divinylbenzene, hydrocarbon-comprising dienes, vinyl chloride and acrylonitrile.

Mention may be made, among the hydrophilic monomers, of vinyl monomers, such as N-vinylpyrrolidone (NVP), hydroxyalkyl methacrylates, such as hydroxyethyl methacrylate (HEMA), and N,N-dimethylacrylamide.

Generally, hydrophilic monomers which do not comprise protic groups will preferably be chosen.

Examples of two-phase hydrophilic polymeric materials which are preferred are methyl methacrylate (MMA) /N-vinylpyrrolidone (NVP) copolymers and methyl methacrylate (MMA)/N,N-dimethylacrylamide copolymers.

The preferred two-phase polymeric material is an MMA/NVP copolymer in a ratio by weight of approximately 30/70, which is the material constituting the Lunelle® lenses from the Company Essilor, or else the material constituting the Rythmic® lenses from the company Essilor, which is an MMA/NVP copolymer in a ratio by weight of approximately 28/72.

This two-phase polymeric material is a hydrogel composed of MMA (hydrophobic) microdomains of approximately 0.02 µm, which are crosslinked by triethylene glycol dimethacrylate (TEGDMA), within a swollen NVP gel, crosslinked by triallyl isocyanurate (TAIC) bridges. Without wishing to be bound by any one theory, it is believed that, during the implementation of the process of the invention with two-phase polymeric materials as described above, the photochromic agent, overall hydrophobic in nature, is for the most part concentrated in the hydrophobic regions of the two-phase gel, in this case the PMMA regions, which will explain the stability and the effectiveness of the photochromic agent (in particular the good kinetics), even in an aqueous medium.

Besides, the inventors have found that specific hydrophilic materials, when treated according to the process of the invention, gave photochromic materials having very high transparency and very good photochromic performances.

These materials are obtained by polymerising a base composition comprising one or more hydrophilic monomer(s) and at least one (meth)acrylate or (meth)acrylamide monomer bearing an alicyclic hydrocarbon group, the alicyclic hydrocarbon group preferably bearing $C_1$-$C_8$ alkyl groups.

More preferably, the at least one (meth)acrylate or (meth)acrylamide monomer bearing an alicyclic hydrocarbon group has the formula :

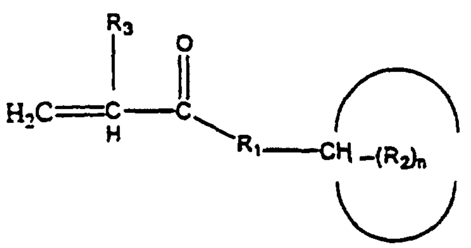

(A)

wherein

$R_1$ is O or NH

Each $R_2$, one independently from each other, is a divalent alkylene radical chosen from the group consisting of $-CH_2-$, $-CHOH-$ and $-CHR_4-$ where $R_4$ is a $C_1$-$C_8$ alkyl group

$R_3$ is H or $CH_3$ and wherein at least one of $R_2$ radical is $-CHR_4-$ and n is 4, 5, 6 or 7.

Specific examples of such monomers are 4-t-butyl, 2-hydroxycyclohexylmethacrylate and 3,3,5-trimethylcyclohexyl-methacrylate.

The hydrophilic monomer may be chosen between those mentioned previously.

Hydroxyalkyl(meth)acrylates, and particularly hydroxyethylmethacrylate, are preferred hydrophilic monomers.

It is most preferred that the hydrophilic monomer comprises (meth)acrylic acid and especially methacrylic acid.

Preferably, the methacrylic acid is present in an amount of 0.2 to 10 % by weight of the base composition.

In a preferred embodiment, the base composition comprises 0.2 to 20 % by weight of the at least one (meth) acrylate monomer bearing an alicyclic hydrocarbon group.

The invention is consequently also directed on new hydrophilic materials especially suited for being treated with the process of the invention.

The new hydrophilic materials are obtained by polymerising a base composition comprising

- (meth)acrylic acid
- at least one radically polymerizable hydrophilic monomer different from (meth)acrylic acid
- at least one (meth)acrylate monomer bearing an alicyclic hydrocarbon group.

The base composition preferably comprises conventional crosslinking agents such as those mentioned previously.

The hydrophilic polymers used in the context of the invention can comprise conventional additives, in particular UV absorbers, in proportions such that the photochromic effect is not affected.

In the process of the invention, the photochromic agent can be any photochromic compound or mixture of photochromic compounds conventionally employed in ophthalmic optics.

The preferred photochromic compounds are spirroxazine and chromene compounds.

Photochromic spirooxazine compounds are compounds which are well known in the art and are disclosed, inter alia, in Patents US-A-5,139,707 and 5,114,621 (spiro(indoline-quinazolinoxazine) and spiro(indoline-benzothiazolooxazine)), EP-A-245,020 (spiro[indoline-[2,3']-benzoxazine]), JP-A-03251587 (spiro[indoline-[2,3']-benzoxazine] substituted at the 6' position) and WO-96/04590 (spiro[indoline-[2,3']-benzoxazine] having a cyano or phenylsulphonyl group at the 6' position).

Chromenes are also well known photochromic compounds. These compounds are disclosed, inter alia, in Patents US-A-5,066,818, WO 92/09593, EP-A-401,958, EP-A-562,915 and WO 93/17071.

The preferred chromenes are naphthopyrans. More preferably, the naphthopyrans carry a free hydroxyl group.

Particularly preferred naphthopyrans are those comprising a structure selected from :

a 2H-naphtho[1,2-b]pyran,
a 3H-naphtho[2,1-b]pyran,
an indeno[2,1-f]naphtho[1,2-b]pyran

and having at least one substituent R represented by one of the following formulas :

(I') -DEZ
(II') -DZ
(III') -EZ
(IV') -Z

wherein

D is 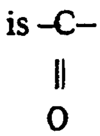 or $-CH_2-$

with the proviso that in formula (II'), D is $-CH_2-$ when Z is OH.

E is represented by the following formula

$$-[(OC_2H_4)_x(OC_3H_6)_y(OC_4H_8)_z]-$$

wherein x, y, z are each a number between 0 and 50 with the sum x+y+z being between 1 and 50.

Z is OH or is a residue of an organic polyol having at least 2 hydroxyl groups.

The group, $-(OC_2H_4)_x-$, represents poly(ethylene oxide); $-(OC_3H_6)_y-$, represents poly(propylene oxide); and, $-(OC_4H_8)_z-$, represents poly(butylene oxide). When used in combination, the poly(ethylene oxide), poly(propylene oxide) and poly(butylene oxide) groups of R may be in a random or block order within the R moiety. The letters x, y and z are each a number between 0 and 50 and the sum of x, y and z is between 1 and 50. The sum of x, y and z may be any number that falls within the range or 1 to 50, e.g., 1, 2, 3... 50. The sum may also range from any lower number to any higher number within the range of 1 to 50, e.g., 6 to 50, 31 to 50. The numbers for x, y, and z are average values and can be partial numbers, e.g., 9.5.

Preferred 2H-naphto[1,2-b]pyran structures have the following formula :

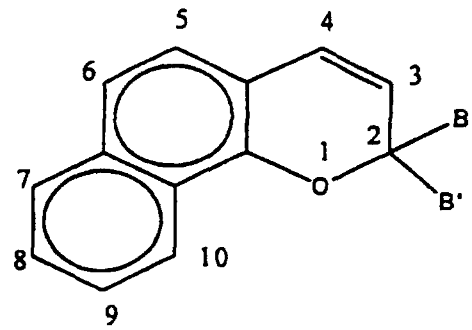

(I")

wherein
B and B' are aryl groups, preferably phenyl, substituted or not.

Preferred 3H-naphtho[2,1-b]pyran structures have the following formula :

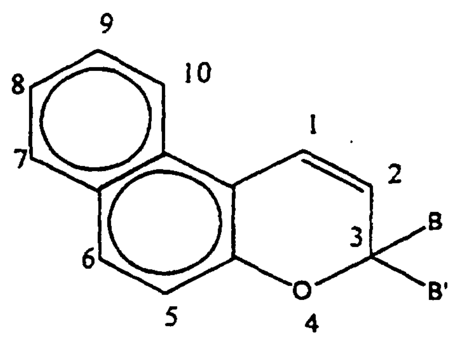

(II")

wherein B and B' have the same meaning as above.

Preferred indeno[2,1-f]naphtho[1,2-b]pyran structures have the following formula :

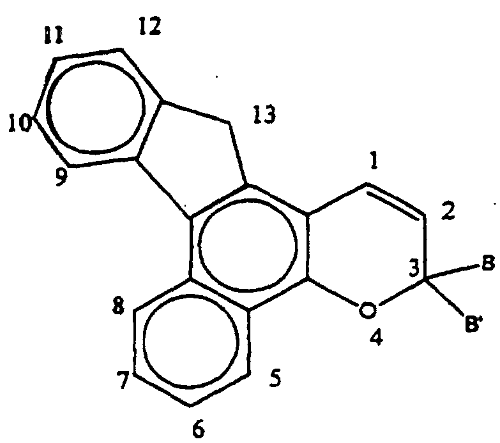

(III")

wherein B and B' have the same meanings as above.

The preferred naphthopyran corresponds to the formula of an indeno[2,1-f]naphtho[1,2-b]pyran and, in this case, the free hydroxyl group is attached to the indeno group at the 13 position. Finally, the preferred naphthopyrans comprise two phenyl groups at the 3 position of the pyran group.

Each of naphthopyrans comprising one of the 3 naphthopyran structures I", II", III" as defined above comprises one or several substituants R.

The one or several substituent(s) R may be on the naphthopyran structure or on the B and/or B' groups.

If one or several substituent(s) R are on the B and/or B' groups, the B and/or B' groups are preferably moito-R-substituted phenyls.

The number of R groups (including the mono-R-substituted phenyls) may be 2, 3, 4, 5 or a number equal to the total number of substituents possible on the naphthopyran.

When there is more than one R group or mono-R-substituted phenyl on the naphthopyran, the R groups may be the same or different, e.g., there may be two different groups selected from formulas I' to IV'.

Preferably there is only one substituent R on each naphthopyran.

Most preferred are the naphthopyrans wherein R represents -EZ or -Z, and wherein y=z=0 in formula E.

Preferably the organic polyol used to form the residue -Z has the formula $G(OH)_k$ wherein G is the backbone of the polyol and k is at least 2. Preferably, k is an integer from 2 to 5 and most preferably 4.

Examples of organic polyols that may be used to form the residue -Z include polyols having at least 3 hydroxy groups such as (a) low molecular weight polyols, i.e., polyols having an average molecular weight less than 500, e.g, aliphatic trials, such as $C_2$-$C_{10}$ aliphatic triols, polyhydric alcohols and alkoxylated low molecular weight polyols ; (b) polyester polyols ; (c) polyether polyols; (d) amide-containing polyols ; (e) epoxy polyols; (f) polyhydric polyvinyl alcohols ; (g) urethane polyols ; (h) polyacrylic polyols ; (i) polycarbonate polyols ; and (j) mixtures of such polyols.

Preferably, the organic polyol is selected from low molecular weight polyols and extended polyols.

Examples of low molecular weight organic polyols that can be used in the preparation of the hydroxylated photochromic compounds preferably used in the present invention include: tetramethylolmethane, i.e., pentaerythritol, dipentaerythritol, tripentaerythritol; trimethylolethane ; trimethylolpropane; ditrimethylolpropane; 1,2,3-propanetriol, i. e., glycerol ; 2-(hydroxymethyl)-2-methyl-1,3-propanediol; 2-(hydroxymethyl)-2-ethyl-1,3-propanediol. Extended polyols are reaction products having therminal hydroxyl groups of the polyol and a suitable reactant, e.g., an alkylene oxide, or a lactone. Examples of such extended polyols include ε-caprolactone extended trimethylol methane and ethoxylated or propoxylated trimethylolpropane or pentaerythritol having a number average molecular weight less than 500.

The residue -Z is formed by the reaction of one of the hydroxyl groups on the polyol with a precursor of group D, such as carboxylic acid or a methylene halide, a precursor of group E, such as polyalkyleneglycol or a hydroxyl group as a substituent of the naphthopyran structure, especially in naphthopyran structures of formula I", II" or III'.

The sheme of synthesis is given hereafter in a specific case wherein the naphthopyran is an indeno[2,1-f] naphtho[1,2-b]pyran and the organic polyol is an ethoxylated pentaerythritol containing 4 randomly distributed ethoxy equivalents per mole.

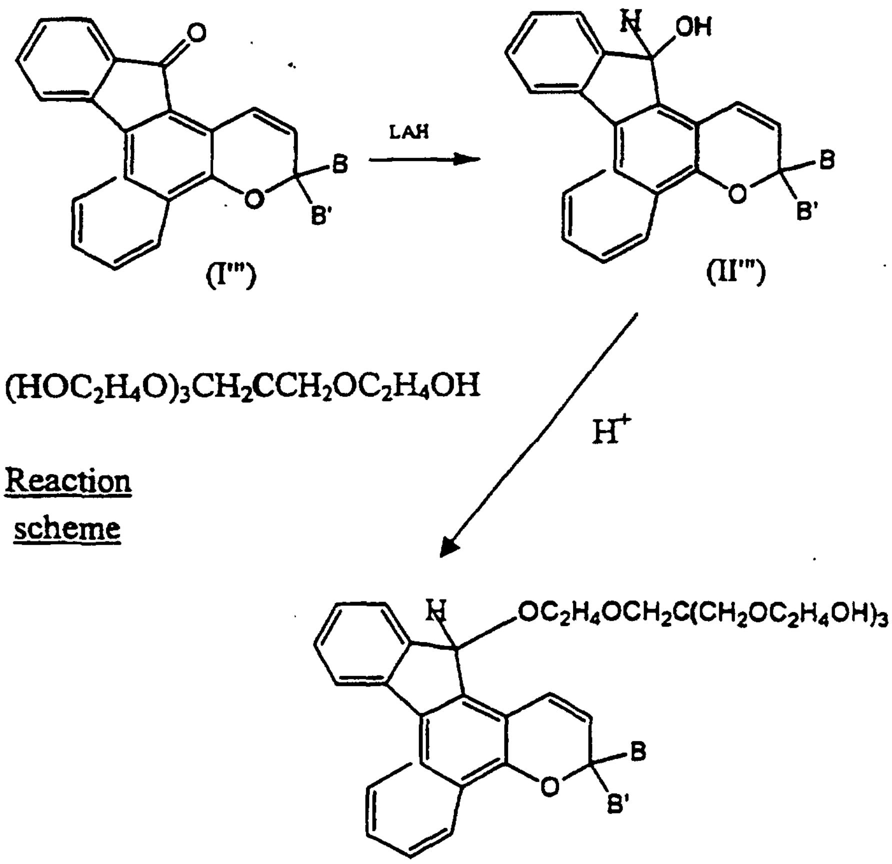


(I''') (II''')

Reaction scheme

(III''')

In reaction scheme, the compound represented by formula (I''') is reduced with lithium aluminum hydride (LAH) to produce the compound represented by formula (II''').

Procedures for preparing the compound of formula (I''') are disclosed in US patent 5,645,767. An ethoxylated pentaerythritol containing 4 randomly distributed ethoxy equivalents per mole is reacted with the compound of formula (II''') using an acid ($H^+$) to form several ethoxylated isomers including the polyhydroxylated indeno-fused naphthopyran of formula (III''').

The preferred chromenes are the photochromic compound (I) and (IA) described hereinbelow.

The photochromic compound comprising a nucleus of chromene type exhibit better stability and better spectrokinetic performances within a hydrogel than the spirooxazines.

The solvents for dissolving the photochromic agent can be any solvent or mixture of solvents in which the photochromic agent is at least partially soluble. The solvent is preferably a dipolar aprotic solvent. The preferred solvents are N-methylpyrrolidone (NMP), dimethyl sulphoxide (DMSO), diethylene glycol and tetrahydrofuran (THF). The particularly preferred solvents are NMP and DMSO. The most preferred solvent is a mixture of DMSO/water.

The concentration of photochromic agent in the impregnating solution is generally from $10^{-4}$ to 10 %, preferably from $10^{-4}$ to 1 % by weight, more preferably from 0.05 to 0.25 % by weight.

The impregnating of the material is generally carried out by immersion, at room temperature, of the polymeric material in the photochromic solution with stirring. The duration of immersion varies according to the nature of the polymeric material and of the photochromic agents solution and is generally of the order of one minute to 2 hours, preferably 5 minutes to one hour.

The impregnating is carried out into the body, that is to say to the core, of the hydrogel and, consequently, the hydrogel, and in particular the final contact lens as well, comprises the photochromic compound incorporated throughout its body.

After impregnating, the polymeric material is treated with an aqueous solution, for example physiological saline, in order to replace the impregnated solvent with the aqueous solution.

The treatment may be performed in two steps :

1st step : treatment with deionized water to replace the impregnated solvent with the deionized water.
2nd step : treatment with saline solution to replace the deionized water with the saline solution.

The whole treatment with aqueous solutions may take 30 minutes to 4 hours, preferably around one hour.
It is performed at a temperature varying from 15 to 80°C, but preferably at ambient temperature (about 20°C).
The following examples illustrate the present invention. In the examples, except when otherwise indicated, all the percentages and parts are expressed by weight.

Examples 1 to 9

Commercial lenses in the hydrated state were immersed in 2 ml of different photochromic solutions of a photochromic compound (I) and subjected to the treatment for 5 minutes while stirring with a plate.
On conclusion of the steeping, the lenses are rinsed with physiological saline and then immersed in this saline until they have recovered their initial diameter (approximately ten minutes).
The lenses are then exposed to UV radiation for 2 minutes.
A UV-visible absorption spectrum is run on the lenses before and after exposure to UV radiation.
The lenses are sterilized at 121 °C for 20 minutes.
A UV-visible absorption spectrum is again run before and after exposure to UV radiation.
The results observed are combined in TABLE I below.

| Example No. | Lens | Hydrophilicity % | Photochromic solution | Appearance of the lens after UV exposure | Preservation of the photochromism after sterilisation |
|---|---|---|---|---|---|
| 1 | HEMA | 37 | DMSO/ (I) (0.05 %) | Homogeneous colouring | Yes, but highly attenuated photo-chromic effect |
| 2 | HEMA | 37 | NMP/ (I) (0.05 %) | Homogeneous colouring | Yes, but highly attenuated photo-chromic effect |
| 3 | Lunelle® | 70 | NMP/ (I) (0.05 %) | Homogeneous blue colouring | Yes |
| 4 | Lunelle® | 70 | DMSO/ (I) (0.05 %) | Homogeneous blue colouring | Yes |
| 5 | Menicon® Soft 72 | 72 | DMSO/ (I) (0.1 %) | Purple colouring | Yes |
| 6 | Menicon® Soft 72 | 72 | NMP/ (I) (0.109 %) | Homogeneous purple colouring | Yes |
| 7 | Rythmic® | 73 | DMSO/ (I) (0.05 %) | Homogeneous blue colouring | Yes |
| 8 | Rythmic® | 73 | NMP/ (I) (0.05 %) | Homogeneous blue colouring | Yes |
| 9 | Gentle Touch® | 65 | NMP/ (I) (0.102 %) | Navy blue colouring | Yes |

**TABLE I**

HEMA (Essilor) : hydroxyethyl methacrylate polymer
Lunelle® (Essilor) : MMA/NVP copolymer
Menicon Soft® 72 (Menicon Europe) : N,N-dimethyl-acrylamide/methyl methacrylate/N-vinylpyrrolidone copolymer
Rythmic® (Essilor) : MMA/NVP copolymer
Gentle Touch® (PHB) : methyl methacrylate/N,N-dimethyl-acrylamide copolymer.

Photochromic compound (I)

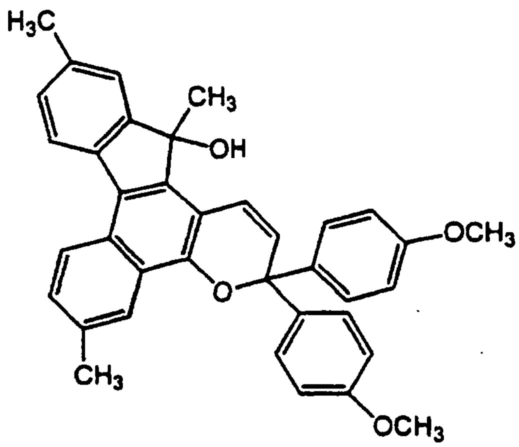

The synthesis of this photochromic compound is disclosed in Patent US 5,645,767.

Examples 10 to 27

Various commercial contact lenses were treated, by proceeding as above, with different photochromic solutions.
The photochromic compounds used are as follows :

Chromenes

a

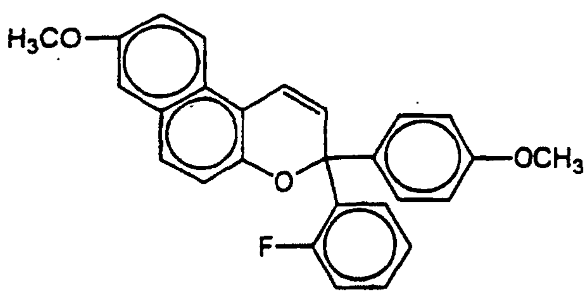

This compound is disclosed in Patent Application WO 93/17071.

b

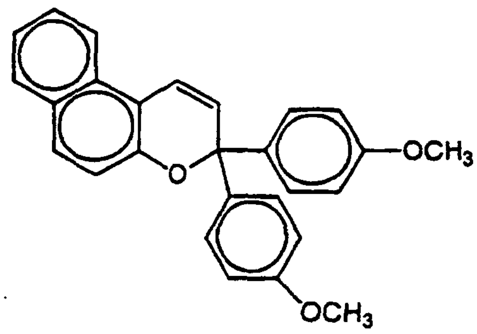

The synthesis of this photochromic compound is disclosed in Patent US 5,520,853.

c

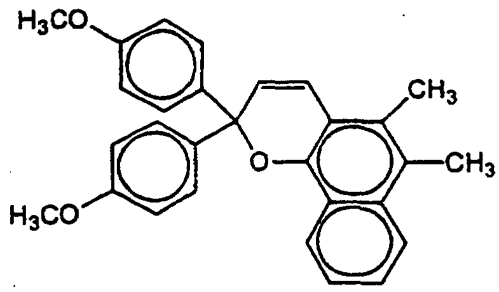

d

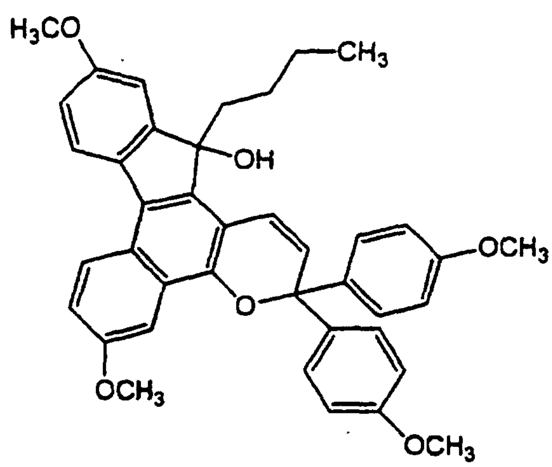

The synthesis of this photochromic compound is disclosed in a general way in Patent US 5,645,767.

Spirooxazines

e

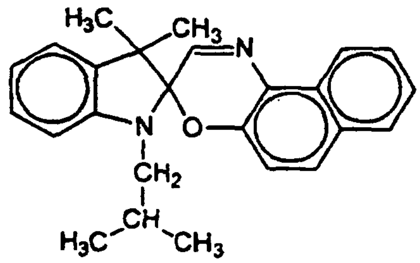

f

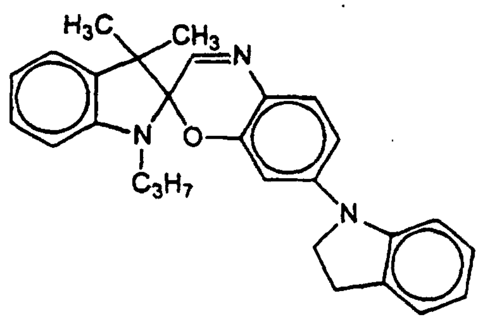

g

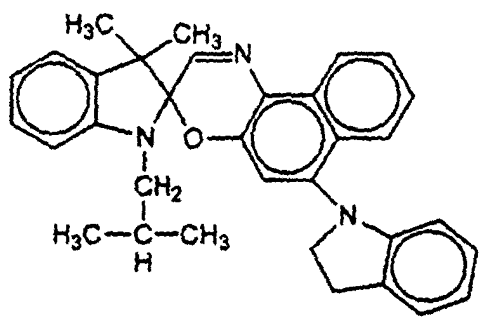

h

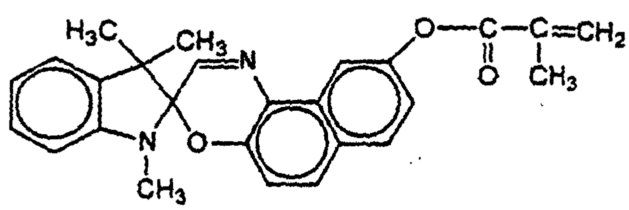

The compound h is disclosed in European Patent EP 277,639.

The compounds c, e, f and g are commercially available from the company James Robinson.

The results are given in TABLE II.

| Example No. | Lens | Solvent | Photochromic Agent | Appearance of the lens after UV exposure | Preservation of the photochromism after sterilisation |
|---|---|---|---|---|---|
| 10 | Lunelle® | DMSO | a (0.10 %) | Vivid orange red colouring | Yes |
| 11 | Lunelle® | Diethylene glycol | a (0.105 %) | Orange colouring | Yes |
| 12 | Lunelle® | THF | a (0.106 %) | Orange colouring | Yes |
| 13 | Menicon Soft ®72 | DMSO | a (0.101 %) | Homogeneous orange colouring | Yes |
| 14 | Menicon Soft® 72 | NMP | a (0.104 %) | Homogeneous orange colouring | Yes |
| 15 | Lunelle® | NMP | b (0.05 %) | Homogeneous orange red colouring | Yes |
| 16 | Lunelle® | DMSO | b (0.101 %) | Blood red colouring | Yes |
| 17 | Menicon Soft®72 | DMSO | b (0.101 %) | Homogeneous orange colouring | Yes |
| 18 | Menicon Soft® 72 | NMP | b (0.106 %) | Homogeneous orange colouring | Yes |
| 19 | Lunelle® | NMP | c (0.102 %) | Homogeneous red colouring | Yes |
| 20 | Lunelle® | DMSO | d (0.104 %) | Homogeneous bottle green colouring | Yes |
| 21 | Lunelle® | NMP | d (0.106 %) | Bottle green colouring | Yes |
| 22 | Menicon Soft® 72 | DMSO | d (0.104 %) | Homogeneous blue-green colouring | Yes |
| 23 | Menicon Soft® 72 | NMP | d(0.106 %) | Homogeneous blue-green colouring | Yes |
| 24 | Lunelle® | NMP | e (0.103 %) | Royal blue colouring | Yes |
| 25 | Lunelle® | NMP | f (0.1 %) | Turquoise blue colouring | Yes |
| 26 | Lunelle® | NMP | g (0.101 %) | Turquoise blue colouring | Yes |
| 27 | Lunelle® | NMP | h (0.101 %) | Intense blue-green colouring | Yes |

TABLE II

Comparative tests (comparison of the kinetics of colouring in different materials)

Three contact lenses are rendered photochromic by the process of the invention (the photochromic compound incorporated is the compound (I)) using a 0.1 % solution of compound (I).
Their kinetic performances are compared with those of contact lenses obtained by the cast in place process. Unless indicated, the performances are measured at 35 °C, in all the examples of this application.
For this, each of the contact lenses is subjected to UV radiation of 6.87 $W/m^2$ and radiation in the visible region of 50.47 klux, for a period of 10 minutes.
The photochromic compound reaches its maximum colouring in this period of time and the graph of T (transmission) against f (time) and D (optical density) against f (time) is recorded during the period of colouring, the transmission values being measured for a wavelength λ corresponding to the absorption maximum of the photochromic compound ($\lambda_{max}$).
The half-colouring time $T_{1/2}$ colo, that is to say the time necessary to pass from D0 (initial optical density in the unexcited state) to

$$\frac{(D_{10} - D_0)}{2} + D_0$$

where $D_{10}$ represents the optical density of the contact lens after irradiating for 10 minutes at the wavelength $\lambda_{max}$, is subsequently measured.

| Contact lenses According to the invention | $T_{1/2}$ colo (1/2 Colouring time) |
|---|---|
| - Gentle Touch@ MMA/DMAA | 15 seconds |
| - Lunelle® MMA/NVP | 21 seconds |
| - Menicon® 72 MMA/DMAA/NVP | 48 seconds |

Lenses according to the prior art

Lenses are manufactured by the cast in place process.
Three HEMA-based formulations are tested :

| | HEMA 1 | HEMA 2 | HEMA3 |
|---|---|---|---|
| HEMA | 100 | 100 | 100 |
| Ethylene glycol dimethacrylate | 0.2 % | 0.2 % | 0.2 % |
| AIBN | 0.5 % | 0.1 % | 0.1 % |
| Photochromic compoud (I) | 0.5 % | 1 % | 0.5 % |

The polymerization of the lenses is carried out in bulk and thermally.
The temperature cycle varies from 40 °C to 120 °C (rise increasing according to a cycle of 50-60 hours).
The 1/2 colouring times are measured on the lenses obtained :

| | $T_{1/2}$ colo |
|---|---|
| HEMA 1 | 65 seconds |
| HEMA 2 | 90 seconds |
| HEMA 3 | 80 seconds |

Other comparative tests are carried out.
An MMA (30)/NVP (70)/allyl methacrylate/AIBN/photochromic compound (I) mixture is polymerised.
None of the tests carried out resulted in a lens exhibiting acceptable photochromic characteristics (irremediably coloured lenses, loss of the photochromic effect).

It is therefore seen that the process of the invention results, via mild conditions, in lenses with photochromic properties which are improved with respect to the prior art with regard to the photochromic performances and the stability.
In the case of ophthalmic lenses, the photochromic agent is incorporated at least in the central optical region of the lens. The central optical region is that which confers the corrective properties of the contact lens, if it is a corrective contact lens.

Examples 28 to 31

Several commercial contact lenses are rendered photochromic by using the process of the invention.
Each lens is soaked at room temperature during 20 minutes in a solution of dimethylsulfoxide/water (respective weight ratio 70/30) containing 0.0125 % of compound I.
Then the lenses are rinsed with a saline solution.
The obtained lenses are transparent and photochromic.
The spectrokinetic performances of each of the obtained lenses are measured and reported in table 4.

Table 4

| Ex. | Treated lens | $T_{1/2}$ colo (seconds) | $T_{1/4}$ colo (seconds) | ΔT colo (%) |
|---|---|---|---|---|
| Ex 28 | Rythmic® | 16.9 | 7.1 | 42.8 |
| Ex 29 | Rythmic® UV (contact lens as example 28 but including an UV absorber) | 20.1 | 8.3 | 38.6 |
| Ex 30 | Permaflex® natural | 163 | 6.9 | 35.6 |
| Ex 31 | Precision UV | 25.6 | 9.9 | 27.7 |

Rythmic® Copolymer of N-vinylpyrrolidone/methyl methacrylate/allylmethacrylate
Permaflex® natural Copolymer of N-vinylpyrrolidone/methyl methacrylate
Precision® UV Copolymer of N-vinylpyrrolidone/methyl methacrylate

$T_{1/4}$ colo is the time necessary to pass from $D_0$ (initial optical density in the unexcited state) to

$$D_0 + \frac{(D_{10} - D_0)}{4}$$

$$\Delta T \text{ colo} = T_{10} - T_0 .$$

wherein $T_{10}$ is the transmission of the contact lens after 10 minutes irradiation (UV 6.87 W/m$^2$ - visible 50.47 klux) and $T_0$ is the transmission of the contact lens in the unexcited state.

Examples 32 to 34

Several commercial contact lenses are rendered photochromic by using the process of the invention.
Each contact lens is treated during 5 minutes at ambient temperature with a 0.1 % solution of the compound IA having the formula :

(IA)

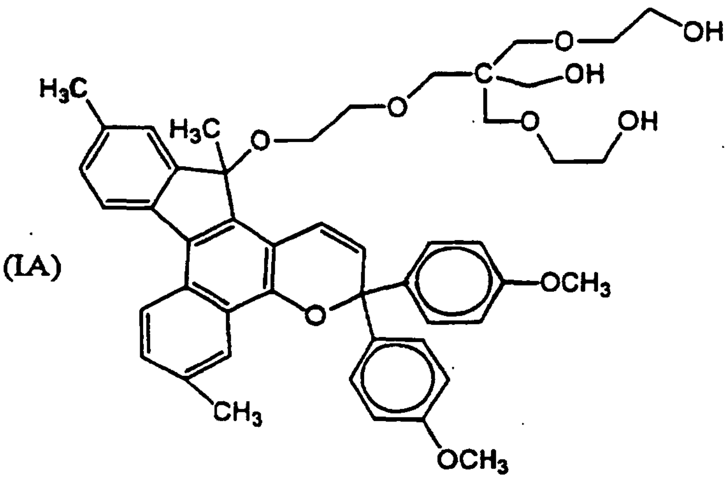

(The method of synthesis of (IA) is described hereafter.)

IA being dissolved in N-methylpyrrolidone.
Then the contact lens in rinsed with a saline solution.
The obtained final contact lens is transparent and photochromic.
Transparency and photochromic performances are maintained even after a sterilization treatment in heated water.
The photochromic performances are measured and reported in table 5.

Table 5

| Ex. | Treated lens | $T_{1/2}$ colo | $T_{1/4}$ colo | $\Delta T$ colo |
|---|---|---|---|---|
| Ex 32 | Review® 38 | 4.9 | 9.9 | 21.8 |
| Ex 33 | Rythmic® | 4.9 | 9.9 | 42.2 |
| Ex 34 | Soflens® 66 | 4.8 | 9.6 | 42.5 |
| Review® 38 hydroxyethylmethacrylate polymer (HEMA)<br>Soflens® 66 HEMA/NVP/4-t-butyl, 2 hydroxycyclohexylmethacrylate | | | | |

Preparation of photochromic compound IA

STEP 1

Potassium t-butoxide (75 grams, 0.67 mole) was added to a reaction flask containing 200 milliliters (mL) of toluene. The reaction flask was equipped with an overhead stirrer, dropping funnel, and a condenser with nitrogen inlet. The contents of the reaction flask was heated to reflux temperature and a mixture of 4,4'-dimethylbenzophenone (105 grams, 0.5 mole), dimethyl succinate (90 grams, 0.62 mole), and toluene (200 grams) was added over a period of one-half hour. The resulting pasty mixture was refluxed an additional two hours, cooled, and about 400 mL of water was added and mixed well. The aqueous layer was separated, acidified with dilute hydrochloric acid, and extracted with 200 mL of toluene. The solvents, toluene and residual t-butanol, were removed on the rotary evaporator to produce a near quantitative yield of crude half-ester, 4,4-di(4-methylphenyl)-3-methoxycarbonyl-3-butenoic acids. This material was not purified further but was used directly in the next step.

STEP 2

The crude half-ester from Step 1 was added to a reaction flask containing 200 mL of toluene. Acetic anhydride

(100 grams) and anhydrous sodium acetate (15 grams) were added and the mixture was refluxed for 17 hours. The mixture was cooled and the solvent, toluene, was removed on a rotary evaporator. The resulting residue was dissolved in 200 mL of methylene chloride and stirred. Water (200 mL) was added followed by the slow addition of solid sodium carbonate until carbon dioxide evolution ceased. The methylene chloride layer was separated and washed with water. The solvent, methylene chloride, was removed on a rotary evaporator to yield about 100 grams of crystalline solid. The recovered product, 1-(4-methylphenyl)-2-methoxycarbonyl-4-acetoxy-6-methyl naphtalene, had a melting point of 144-146°C.

STEP 3

The product from Step 2 (about 100 grams) was added to a reaction flask containing 350 mL of a 10 weight percent aqueous sodium hydroxide solution and 50 mL of methanol. The mixture was refluxed for one hour, cooled, then slowly poured into a beaker containing approximately one liter of cold (approx. 4°C) dilute hydrochloric acid. About 100 grams of the resulting crystalline product, 1-(4-methylphenyl)-4-hydroxy-6-methyl-2-naphthoic acid, having a melting point of 210-213°C, was collected by vacuum filtration.

STEP 4

The product from Step 3 (about 100 grams) was added to a reaction flask containing xylene (250 grams) and 250 grams of a 85 weight percent phosphoric acid solution. The stirred mixture was refluxed in a one liter flask equipped with a Dean-Stark trap for 20 hours. During this time a solid product formed. The mixture was cooled and 200 mL of water was added. The solid was broken up with a spatula, filtered, and washed successively with water, 5 weight percent aqueous sodium bicarbonate, and water. Ninety grams of the product, 3,9-dimethyl-5-hydroxy-7H-benzo[C]-fluoren-7-one, were recovered by vacuum filtration.

STEP 5

The product from Step 4 (10 grams) was added to a reaction flask containing 1,1-di(4-methoxyphenyl)-2-propyn-1-ol (10 grams) and 100 mL of toluene. The resulting mixture was stirred and heated to 50°C, three drops of dodecylbenzene sulfonic acid were added, and the reaction mixture was kept at 50°C for five hours. After the reaction mixture cooled to room temperature, it was filtered and the collected filtrate was washed three times with 5 weight percent aqueous sodium hydroxide. The solvent, toluene, was removed on a rotary evaporator and the desired product crystallized on the addition of acetone to the residue. The solid was vacuum filtered, washed with fresh acetone, and dried to yield 16 grams of a product having a melting point of 227-229°C. An NMR showed the product to have a structure consistent with 3,3-di(4-methoxyphenyl)-6,11-dimethyl-13-oxo-indeno[2,1-f]naphtho[1,2-b]pyran.

STEP 6

The product of Step 5 (10 grams) was added to a reaction flask containing 50 mL of anhydrous tetrahydrofuran. The mixture was cooled in an ice bath and protected from moisture with a nitrogen pad while an excess of methyl Grignard reagent was added to the reaction with stirring After stirring an additional ten minutes, 200 mL of 5 weight percent aqueous hydrochloric acid was added and the organic layer was separated and washed with water. The solvent, tetrahydrofuran, was removed on a rotary evaporator. The addition of approximately ten milliliteas of a 2:1 mixture of hexane:ethyl acetate to the residue caused the crystallization of a non-photochromic material. This material was separated by filtration. The filtrate was column chromatographed on silica using a 3:1 mixture of hexane:ethyl acetate as elutant. The desired product, which crystallized from a methanol mixture, was filtered and dried to yield 8 grams of a product having a melting point of 233-235°C. An NMR spectrum showed the product to have a structure consistent with 3,3-di(4-methoxyphenyl)-6,11,13-trimethyl-13-hydroxy-indeno[2,1-f]naphtho[1,2-b]pyran.

STEP 7

The product from Step 6 (6.0 grams) was added to a reaction flask containing 150 mL of pentaerythritol ethoxylate (3/4 EO/OH) (from Aldrich), 100 mL of tetrahydrofuran, and 2 mL of 37 % hydrochloric acid. The reaction was heated to 60°C and maintained at that temperature for 8 hours with stirring. The reaction mixture was added to 300 mL of water and 100 mL of ethyl acetate was added. The organic layer was separated, washed with water, filtered, and the solvent, ethyl acetate, was removed on a rotary evaporator. The resulting residue was chromatographed on silica using acetonitrile (95 %) and methanol (5 %) as the eluant. The recovered oil was dried to yield 2 grams of product. An NMR spectrum showed the product to have a structure consistent with 3,3-di(4-methoxyphenyl)-6,11,13-trimethyl-13-(2,2-di(2-hydroxyethoxy)methyl-3-hydroxy-propoxy)ethoxy)-indeno[2,1-f]naphtho[1,2-b]pyran.

Examples 35 to 36 :

Two commercial contact lenses are treated using the same procedure as in examples 32 to 34 except that the treatment solution is compound IA in DSMO/water (respective ratio by weight 70/30).

ΔT is measured

| Treated lens | ΔT (%) |
|---|---|
| Review® 38 | 37.8 |
| Rythmic®UV<br>(same as Rythmic but including an UV absorber) | 56.2 |

ΔT is higher than in examples 32 and 33 indicating that higher amounts of photochromic compounds have been incorporated in the contact lenses.

Exemple 37

A mixture of

| | |
|---|---|
| HEMA | 93.037 |
| Methacrylic acid | 2.128 |
| 3,3,5-trimethylcyclohexylmethacrylate | 4.836 |
| EGDMA (ethyleneglycoldimethacrylate) | 0.580 |
| AIBN (Azobisisobutyronitrile) | 0.967 |

The mixture is stirred and a contact lens mold is filled with this mixture.

A polymerization is performed by heating the filled mold at 105°C during 60 minutes and then at 130°C during 60 minutes.

After demolding, the lens is hydrated in a NaCl solution. The hydrated lens is soaked at ambient temperature in a 2 ml DMSO/Deionized water solution (70/30 (weight ratio)) of compound IA (concentration of IA : 0.025 % by weight) for 60 minutes with stirring and then rinsed in 25 ml of saline solution at room temperature for 30 minutes.

Then a sterilization is made at 121 °C.

A transparent, clear and photochromic contact lens is finally obtained.

## Claims

**1.** A process for producing a polymeric material comprising :

a) dissolving a photochromic agent in a solvent or mixture of solvents to obtain a photochromic impregnating solution ;
b) impregnating a crosslinked, transparent, hydrophilic polymeric material with the photochromic impregnating solution to obtain a material impregnated with the photochromic solution;
c) rinsing the impregnated material with an aqueous solution to substantially replace the impregnated solvent with the aqueous solution ; and
d) recovering the resulting photochromic polymeric material.

**2.** The process of claim 1, wherein the crosslinked, hydrophilic and photochromic polymeric material has a degree of hydrophilicity of at least 10 %.

**3.** The process of claim 1, wherein the crosslinked, hydrophilic and photochromic polymeric material has a degree of hydrophilicity of at least 10 %, preferably of at least 35 %.

**4.** The process according to anyone of claims 1 to 3, wherein the crosslinked and hydrophilic polymeric material is hydrated prior to impregnating.

5. The process according to anyone of claims 1 to 4, wherein the photochromic agent comprises at least one spirooxazine or chromene.

6. The process of claim 5, wherein the photochromic compound is a naphthopyran comprising at least one free hydroxyl group.

7. The process of claim 6 wherein the naphthopyran comprises a structure selected from
a 2H-naphtho[1,2-b]pyran,
a 3H-naphtho[2,1-b]pyran,
an indeno[2,1-f]naphtho[1,2-b]pyran
and
having at least one substituent R represented by one of the following formulas :

(I') -DEZ
(II') -DZ
(III') -EZ
(IV')-Z

wherein

D is 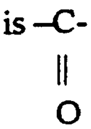 or $-CH_2-$

with the proviso that in formula (II'), D is $-CH_2-$ when Z is -OH
E is represented by the following formula :

$$-[(OC_2H_4)_x(OC_3H_6)_y(OC_4H_8)_z]-$$

wherein x, y, z are each a number between 0 and 50 with the sum x+y+z being between 1 and 50.
Z is OH or is a residue of an organic polyol having at least 2 hydroxyl groups.

8. The process of claim 7, wherein R represents -EZ or -Z.

9. The process according to claim 7 or 8, wherein y = z = 0.

10. The process according to any one of claims 7 to 9, wherein the organic polyol has the formula $G(OH)_k$ wherein G is the backbone of the polyol and k is at least 2.

11. The process of claim 10, wherein k is an integer from 2 to 5.

12. The process of claim 11, wherein k is 4.

13. The process according to any one of claims 7 to 12, wherein the naphthopyran is an indeno[2,1-f]naphtho[1,2-b]pyran and R is attached to the indeno group at the 13 position.

14. The process according to anyone of claims 6 to 13, wherein the naphthopyran comprises two phenyl groups at the 3 position of the pyran ring.

15. The process according to anyone of claims 1 to 14, wherein the crosslinked and hydrophilic polymeric material is further defined as a multiphase material comprising at least one hydrophilic phase and at least one hydrophobic phase.

16. The process of claim 15, wherein the crosslinked and hydrophilic polymeric material is a two-phase material.

**17.** The process according to claim 15 or 16, wherein the crosslinked polymeric material is further defined as a copolymer of at least one hydrophilic monomer and of at least one hydrophobic monomer.

**18.** The process of claim 17, wherein the at least one hydrophilic monomer is non-ionic.

**19.** The process according to claim 17 or 18, wherein the at least one hydrophilic monomer is N-vinylpyrrolidone, hydroxyethyl methacrylate, or N,N-dimethylacrylamide.

**20.** The process according to anyone of claims 17 to 19, wherein the at least one hydrophobic monomer is a $C_1$-$C_{10}$ alkyl (meth)acrylate.

**21.** The process of claim 17, wherein the hydrophilic monomer is a N-vinylpyrrolidone and the hydrophobic monomer is a methyl methacrylate.

**22.** The process of claim 17, wherein the polymeric material is a copolymer of methyl methacrylate and of N-vinylpyrrolidone, a copolymer of N,N-dimethylacrylamide, methyl methacrylate and N-vinylpyrrolidone, or a copolymer of methyl methacrylate and N,N-dimethylacrylamide.

**23.** The process of claim 22, wherein the polymeric material is a copolymer comprising about 30 % by weight methyl methacrylate and about 70 % by weight N-vinylpyrrolidone.

**24.** The process according to anyone of claims 1 to 14, wherein the crosslinked and hydrophilic polymeric material is obtained by polymerising a base composition comprising one or more hydrophilic monomer(s) and at least one (meth)acrylate or (meth)acrylamide monomer bearing an alicyclic hydrocarbon group.

**25.** The process of claim 24, wherein the at least one (meth)acrylate or (meth)acrylamide monomer bearing an alicyclic hydrocarbon group has the formula :

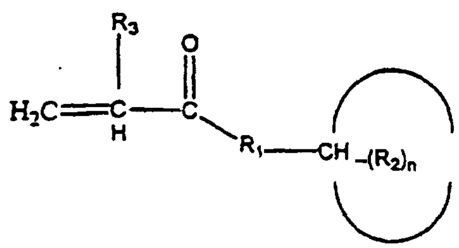

(A)

wherein
$R_1$ is O or NH
$R_2$ is a divalent alkylene radical chosen from the groups consisting of $-CH_2-$, $-CHOH-$, and $-CHR_4-$ where $R_4$ is a $C_1$-$C_8$ alkyl group
$R_3$ is H or $CH_3$ and wherein at least one of $R_2$ radical is $CHR_4$
and n is 4, 5, 6 or 7.

**26.** The process of claim 25, wherein the (meth)acrylate monomer bearing an alicyclic hydrocarbon group is 4-t-butyl, 2-hydroxy cyclohexylmethacrylate or 3,3,5-trimethyl cyclohexylmethacrylate.

**27.** The process according to anyone of claims 24 to 26, wherein the hydrophilic monomer comprises hydroxyethyl (meth)acrylate.

**28.** The process according to anyone of claims 24 to 27, wherein the hydrophilic monomer comprises methacrylic acid.

**29.** The process of claim 28, wherein the methacrylic acid is present in an amount of 0.2 to 10 % by weight of the base composition.

**30.** The process according to any one of claims 24 to 29, wherein the base composition comprises 0.2 to 20 % by

weight of the at least one (meth)acrylate monomers bearing an alicyclic hydrocarbon group.

**31.** The process according to any one of the preceding claims, wherein the solvent is a dipolar aprotic solvent.

**32.** The process of claim 31, wherein the solvent is dimethyl sulphoxide (DMSO) or N-methylpyrrolidone (NMP).

**33.** The process according to anyone of the preceding claims, wherein the material is in the form of an optical or ophthalmic article.

**34.** The process of claim 33, wherein the article is a contact lens.

**35.** The process of claim 34, wherein the photochromic agent is incorporated at least in a central optical region of the lens.

**36.** Hydrophilic material suited for being treated in a process according to anyone of the preceding claims **characterized in that** it is obtained by polymerizing a base composition comprising

- (meth)acrylic acid
- at least one radically polymerizable hydrophilic monomer different from (meth)acrylic acid
- at least one (meth)acrylate or (meth)acrylamide monomer bearing an alicyclic hydrocarbon group.

**37.** The hydrophilic material of claim 36, wherein the at least one (meth)acrylate or (meth)acrylamide monomer bearing an alicyclic hydrocarbon group has the following formula :

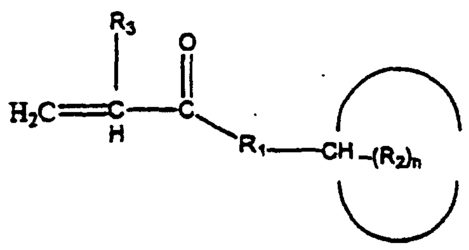

(A)

wherein
$R_1$ is O or NH
$R_2$ is a divalent alkylene radical chosen from the groups consisting of $-CH_2-$, -CHOH-, and $-CHR_4-$ where $R_4$ is a $C_1$-$C_8$ alkyl group
$R_3$ is H or $CH_3$ and wherein at least one of $R_2$ radical is $CHR_4$
and n is 4, 5, 6 or

**38.** The hydrophilic material of claim 36 or 37 **characterized in that** it comprises a photocbromic compound included in the whole mass of said hydrophilic material.

**Patentansprüche**

**1.** Verfahren zur Herstellung eines Polymermaterials, umfassend:

a) Lösen eines photochromen Mittels in einem Lösungsmittel oder einer Mischung aus Lösungsmitteln, um eine photochrome, imprägnierende Lösung zu erhalten;

b) Imprägnieren eines vemetzten, transparenten, hydrophilen Polymermaterials mit der photochromen, imprägnierenden Lösung, um ein mit der photochromen Lösung imprägniertes Material zu erhalten;

c) Spülen des imprägnierten Materials mit einer wässrigen Lösung, um das imprägnierte Lösungsmittel durch die wässrige Lösung im Wesentlichen zu ersetzen; und

d) Rückgewinnen des resultierenden photochromen Polymermaterials.

**2.** Verfahren nach Anspruch 1, bei welchem das vemetzte, hydrophile und photochrome Polymermaterial einen Hydrophilie-Grad von mindestens 10 % aufweist.

**3.** Verfahren nach Anspruch 1, bei welchem das vernetzte, hydrophile und photochrome Polymermaterial einen Hydrophilie-Grad von mindestens 10 %, vorzugsweise mindestens 35 % aufweist.

**4.** Verfahren nach einem der Ansprüche 1 bis 3, bei welchem das vernetzte und hydrophile Polymermaterial vor dem Imprägnieren hydratisiert wird.

**5.** Verfahren nach einem der Ansprüche 1 bis 4, bei welchem das photochrome Mittel mindestens ein Spirooxazin oder Chromen umfasst.

**6.** Verfahren nach Anspruch 5, bei welchem die photochrome Verbindung ein Naphthopyran ist, umfassend mindestens eine freie Hydroxylgruppe.

**7.** Verfahren nach Anspruch 6, bei welchem das Naphthopyran eine Struktur umfasst, ausgewählt aus:

2H-Naphto[1,2-b]pyran,
3H- Naphto[1,2-b]pyran,
Indeno[2,1-f]naphtho[1,2-b]pyran

und mindestens einen Substituenten R besitzt, dargestellt durch eine der folgenden Formeln:

(I') -DEZ
(II') -DZ
(III') -EZ
(IV') -Z

wobei D ein

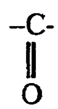

oder $-CH_2-$ist unter der Voraussetzung, dass in der Formel (II') D ein $-CH_2-$ ist, wenn Z ein -OH ist.
E wird durch die folgende Formel dargestellt:

$$-[(OC_2H_4)_x(OC_3H_6)_y(OC_4H_8)_z]-$$

wobei x, y und z jeweils eine Zahl zwischen 0 und 50 ist, wobei die Summe x+y+z zwischen 1 und 50 beträgt.
Z ist OH oder ein organischer Polyolrest mit mindestens 2 Hydroxylgruppen.

**8.** Verfahren nach Anspruch 7, bei welchem R ein -EZ oder -Z darstellt.

**9.** Verfahren nach Anspruch 7 oder 8, bei welchem y = z = 0.

**10.** Verfahren nach einem der Ansprüche 7 bis 9, bei welchem das organische Polyol die Formel $G(OH)_k$ aufweist, wobei G die Hauptkette des Polyols und k mindestens 2 ist.

**11.** Verfahren nach Anspruch 10, bei welchem k eine ganze Zahl zwischen 2 und 5 ist.

**12.** Verfahren nach Anspruch 11, bei welchem k 4 ist.

**13.** Verfahren nach einem der Ansprüche 7 bis 12, bei welchem das Naphthopyran Indeno[2,1-f]naphtho[1,2-b]pyran ist und R an Position 13 an die Indenogruppe geknüpft ist.

**14.** Verfahren nach einem der Ansprüche 6 bis 13, bei welchem das Naphthopyran zwei Phenylgruppen an der Position 3 des Pyranrings umfasst.

**15.** Verfahren nach einem der Ansprüche 1 bis 14, bei welchem das vernetzte und hydrophile Polymermaterial weiterhin definiert ist als ein Multiphasenmaterial, umfassend zumindest eine hydrophile Phase und zumindest eine hydrophobe Phase.

**16.** Verfahren nach Anspruch 15, bei welchem das vemetzte und hydrophile. Polymermaterial ein Zwei-Phasen-Material ist.

**17.** Verfahren nach Anspruch 15 oder 16, bei welchem das vernetzte Polymermaterial weiterhin definiert ist als ein Copolymer aus zumindest einem hydrophilen Monomer und zumindest einem hydrophoben Monomer.

**18.** Verfahren nach Anspruch 17, bei welchem das zumindest eine hydrophile Monomer nichtionisch ist.

**19.** Verfahren nach Anspruch 17 oder 18, bei welchem das zumindest eine hydrophile Monomer N-Vinylpyrrolidon, Hydroxyethylmethacrylat oder N,N-Dimethylacrylamid ist.

**20.** Verfahren nach einem der Ansprüche 17 bis 19, bei welchem das zumindest eine hydrophobe Monomer ein $C_1$-$C_{10}$-Alkyl(meth)acrylat ist.

**21.** Verfahren nach Anspruch 17, bei welchem das hydrophile Monomer ein N-Vinylpyrrolidon und das hydrophobe Monomer ein Methylmethacrylat ist.

**22.** Verfahren nach Anspruch 17, bei welchem das Polymermaterial ein Copolymer aus Methylmethacrylat und N-Vinylpyrrolidon, ein Copolymer aus N,N-Dimethylacrylamid, Methylmethacrylat und N-Vinylpyrrolidon oder ein Copolymer aus Methylmethacrylat und N,N-Dimethylacrylamid ist.

**23.** Verfahren nach Anspruch 22, bei welchem das Polymermaterial ein Copolymer ist, umfassend etwa 30 Gew.-% Methylmethacrylat und etwa 70 Gew.-% N-Vinylpyrrolidon.

**24.** Verfahren nach einem der Ansprüche 1 bis 14, wobei das vemetzte und hydrophile Polymermaterial durch Polymerisierung einer Ausgangszusammensetzung erhalten wird, umfassend ein oder mehrere hydrophile(s) Monomer(e) und mindestens ein (Meth)acrylat- oder (Meth)acrylamidmonomer, welches eine alicyclische Kohlenwasserstoffgruppe trägt.

**25.** Verfahren nach Anspruch 24, bei welchem das zumindest eine (Meth)acrylat- oder (Meth)arcylamidmonomer, welches eine alicyclische Kohlenwasserstoffgruppe trägt, die folgende Formel hat:

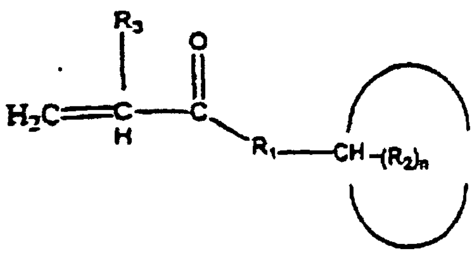

(A)

wobei
$R_1$ ein O oder NH ist;
$R_2$ ein zweiwertiges Alkylenradikal ist, ausgewählt aus der Gruppe bestehend aus $-CH_2-$, -CHOH- und $-CHR_4-$, wobei $R_4$ eine $C_1$-$C_8$-Alkylgruppe ist;
$R_3$ ein H oder $CH_3$ ist und wobei zumindest ein $R_2$ -Radikal ein $CHR_4$- ist,
und n 4, 5, 6 oder 7 ist.

**26.** Verfahren nach Anspruch 25, bei welchem das (Meth)acrylatmonomer, das eine alicyclische Kohlenwasserstoffgruppe trägt, 4-*t*.-Butyl,2-hydroxycyclohexylmethacrylat oder 3,3,5-Trimethylcyclohexylmethacrylat ist.

**27.** Verfahren nach einem der Ansprüche 24 bis 26, bei welchem das hydrophile Monomer Hydroxyethyl(meth)acrylat umfasst.

**28.** Verfahren nach einem der Ansprüche 24 bis 27, bei welchem das hydrophile Monomer Methacrylsäure umfasst.

**29.** Verfahren nach Anspruch 28, bei welchem die Methacrylsäure in einer Menge von 0,2 bis 10 Gew.-% der Ausgangszusammensetzung vorliegt.

**30.** Verfahren nach einem der Ansprüche 24 bis 29, bei welchem die Ausgangszusammensetzung 0,2 bis 20 Gew.-% zumindest eines (Meth)acrylatmonomers, das eine alicyclische Kohlenwasserstoffgruppe trägt, umfasst.

**31.** Verfahren nach einem der vorhergehenden Ansprüche, bei welchem das Lösungsmittel ein dipolares, aprotisches Lösungsmittel ist.

**32.** Verfahren nach Anspruch 31, bei welchem das Lösungsmittel Dimethylsulfoxid (DMSO) oder N-Methylpyrrolidon (NMP) ist.

**33.** Verfahren nach einem der vorhergehenden Ansprüche, bei welchem das Material in Form eines optischen oder ophthalmischen Artikels vorliegt.

**34.** Verfahren nach Anspruch 33, bei welchem der Artikel eine Kontaktlinse ist.

**35.** Verfahren nach Anspruch 34, bei welchem das photochrome Mittel zumindest in einer zentralen optischen Region der Linse eingearbeitet ist.

**36.** Hydrophiles Material, geeignet, um in einem Verfahren nach einem der vorhergehenden Ansprüche behandelt zu werden, **dadurch gekennzeichnet, dass** es erhalten wird durch die Polymerisierung einer Ausgangszusammensetzung, umfassend

- (Meth)acrylsäure
- zumindest ein radikalisch polymerisierbares hydrophiles Monomer, verschieden von (Meth)acrylsäure
- zumindest ein (Meth)acrylat- oder (Meth)acrylamidmonomer, welches eine alicyclische Kohlenwasserstoffgruppe trägt.

**37.** Hydrophiles Material nach Anspruch 36, bei welchem das zumindest eine (Meth)acrylatoder (Meth)acrylamidmonomer, welches eine alicyclische Kohlenwasserstoffgruppe trägt, die folgende Formel hat:

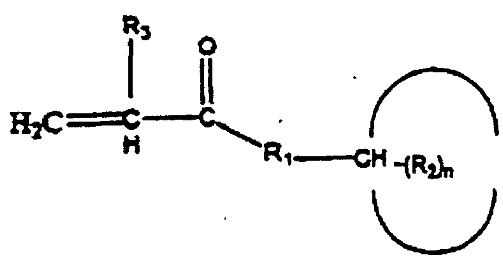
(A)

wobei
$R_1$ ein O oder NH ist;
$R_2$ ein zweiwertiges Alkylenradikal ist, ausgewählt aus der Gruppe bestehend aus $-CH_2-$, $-CHOH-$ und $-CHR_4-$, wobei $R_4$ eine $C_1$-$C_8$-Alkylgruppe ist;
$R_3$ ein H oder $CH_3$ ist und zumindest mindestens ein $R_2$-Radikal ein $CHR_4$ ist,
und n 4, 5, 6 oder 7 ist.

**38.** Hydrophiles Material nach den Ansprüchen 36 oder 37, **dadurch gekennzeichnet, dass** es eine photochrome

Verbindung umfasst, welche in der gesamten Masse des genannten hydrophilen Materials beinhaltet ist.

**Revendications**

1. Procédé pour la production d'un matériau polymère comprenant :

   a) la dissolution d'un agent photochromique dans un solvant ou un mélange de solvants afin d'obtenir une solution d'imprégnation photochromique;
   b) l'imprégnation d'un matériau polymère réticulé, hydrophile, transparent, par la solution d'imprégnation photochromique afin d'obtenir un matériau imprégné avec la solution photochromique;
   c) le rinçage du matériau imprégné avec une solution aqueuse pour remplacer sensiblement le solvant imprégné par la solution aqueuse; et
   d) la récupération du matériau polymère photochromique obtenu.

2. Procédé selon la revendication 1, dans lequel le matériau polymère hydrophile réticulé photochromique a un degré d'hydrophilicité d'au moins 10%.

3. Procédé selon la revendication 1, dans lequel le matériau polymère hydrophile réticulé photochromique a un degré d'hydrophilicité d'au moins 10%, de préférence d'au moins 35%.

4. Procédé selon l'une quelconque des revendications 1 à 3, dans lequel le matériau polymère hydrophile réticulé est hydraté avant l'imprégnation.

5. Procédé selon l'une quelconque des revendications 1 à 4, dans lequel l'agent photochromique comprend au moins une spirooxazine ou un chromène.

6. Procédé selon la revendication 5, dans lequel le composé photochromique est un naphtopyrane comprenant au moins un groupe hydroxyle libre.

7. Procédé selon la revendication 6, dans lequel le naphtopyrane comprend une structure choisie parmi les suivantes :

   un 2H-naphto[1,2-b]pyrane,
   un 3H-naphto[2,1-b]pyrane,
   un indéno[2,1-f]naphto[1,2-b]pyrane

   et
   ayant au moins un substituant R représenté par l'une des formules suivantes :

   (I') -DEZ
   (II') -DZ
   (III') -EZ
   (IV') -Z

   dans lesquelles :

   D est

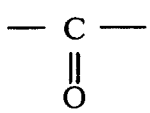 ou $-CH_2-$

   à condition que, dans la formule (II'), D soit $-CH_2-$ lorsque Z est -OH;
   E est représenté par la formule suivante :

$$-[(OC_2H_4)_x(OC_3H_6)_y(OC_4H_8)_z]-$$

dans laquelle x, y, z sont chacun un nombre de 0 à 50 avec la somme x+y+z qui est entre 1 et 50;
Z est OH ou est un résidu d'un polyol organique ayant au moins 2 groupes hydroxyle.

**8.** Procédé selon la revendication 7, dans lequel R représente -EZ ou -Z.

**9.** Procédé selon la revendication 7 ou 8, dans lequel y = z = 0.

**10.** Procédé selon l'une quelconque des revendications 7 à 9, dans lequel le polyol organique a la formule $G(OH)_k$ dans laquelle G est le squelette du polyol et k est au moins 2.

**11.** Procédé selon la revendication 10, dans lequel k est un entier de 2 à 5.

**12.** Procédé selon la revendication 11, dans lequel k est égal à 4.

**13.** Procédé selon l'une quelconque des revendications 7 à 12, dans lequel le naphtopyrane est un indéno[2,1-f]naphto[1,2-b]pyrane et R est fixé au groupe indéno en position 13.

**14.** Procédé selon l'une quelconque des revendications 6 à 13, dans lequel le naphtopyrane comprend deux groupes phényle en position 3 du cycle pyrane.

**15.** Procédé selon l'une quelconque des revendications 1 à 14, dans lequel le matériau polymère hydrophile réticulé est en outre défini comme un matériau multiphase comprenant au moins une phase hydrophile et au moins une phase hydrophobe.

**16.** Procédé selon la revendication 15, dans lequel le matériau polymère hydrophile réticulé est un matériau à deux phases.

**17.** Procédé selon la revendication 15 ou 16, dans lequel le matériau polymère réticulé est en outre défini comme un copolymère d'au moins un monomère hydrophile et d'au moins un monomère hydrophobe.

**18.** Procédé selon la revendication 17, dans lequel le au moins un monomère hydrophile est non ionique.

**19.** Procédé selon la revendication 17 ou 18, dans lequel le au moins un monomère hydrophile est la N-vinylpyrrolidone, le méthacrylate d'hydroxyéthyle ou le N,N-diméthylacrylamide.

**20.** Procédé selon l'une quelconque des revendications 17 à 19, dans lequel le au moins un monomère hydrophobe est un (méth)acrylate d'alkyle en $C_1$-$C_{10}$.

**21.** Procédé selon la revendication 17, dans lequel le monomère hydrophile est la N-vinylpyrrolidone et le monomère hydrophobe est un méthacrylate de méthyle.

**22.** Procédé selon la revendication 17, dans lequel le matériau polymère est un copolymère de méthacrylate de méthyle et de N-vinylpyrrolidone, un copolymère de N,N-diméthylacrylamide, de méthacrylate de méthyle et de N-vinylpyrrolidone ou un copolymère de méthacrylate de méthyle et de N,N-diméthylacrylamide.

**23.** Procédé selon la revendication 22, dans lequel le matériau polymère est un copolymère comprenant environ 30% en poids de méthacrylate de méthyle et environ 70% en poids de N-vinylpyrrolidone.

**24.** Procédé selon l'une quelconque des revendications 1 à 14, dans lequel le matériau polymère hydrophile réticulé est obtenu en polymérisant une composition de base comprenant un ou plusieurs monomères hydrophiles et au moins un monomère de (méth)acrylate ou de (méth)acrylamide portant un groupe hydrocarboné alicyclique.

**25.** Procédé selon la revendication 24, dans lequel le au moins un monomère de (méth)acrylate ou de (méth)acrylamide portant un groupe hydrocarboné alicyclique a la formule :

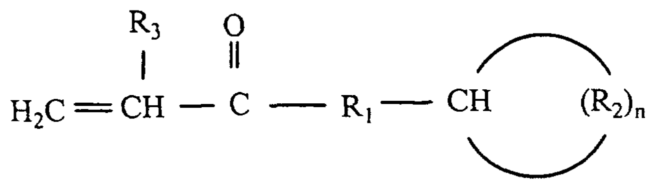

(A)

dans laquelle :

$R_1$ est O ou NH,
$R_2$ est un radical alkylène divalent choisi parmi les groupes $-CH_2-$, - CHOH- et $-CHR_4-$ où $R_4$ est un groupe alkyle en $C_1$-$C_8$,
$R_3$ est H ou $CH_3$ et dans lequel au moins un des radicaux $R_2$ est $CHR_4$,
et n est égal à 4, 5, 6 ou 7.

**26.** Procédé selon la revendication 25, dans lequel le monomère méth(acrylate) portant un groupe hydrocarboné alicyclique est le méthacrylate de 4-t-butyle, le méthacrylate de 2-hydroxycyclohexyle ou le méthacrylate de 3,3,5-triméthylcyclohexyle.

**27.** Procédé selon l'une quelconque des revendications 24 à 26, dans lequel le monomère hydrophile comprend un (méth)acrylate d'hydroxyéthyle.

**28.** Procédé selon l'une quelconque des revendications 24 à 27, dans lequel le monomère hydrophile comprend l'acide méthacrylique.

**29.** Procédé selon la revendication 28, dans lequel l'acide méthacrylique est présent en quantité de 0,2 à 10% en poids de la composition de base.

**30.** Procédé selon l'une quelconque des revendications 24 à 29, dans lequel la composition de base comprend 0,2 à 20% en poids du au moins un monomère de (méth)acrylate portant un groupe hydrocarboné alicyclique.

**31.** Procédé selon l'une quelconque des revendications précédentes, dans lequel le solvant est un solvant aprotique dipolaire.

**32.** Procédé selon la revendication 31, dans lequel le solvant est le diméthylsulfoxyde (DMSO) ou la N-méthylpyrrolidone (NMP).

**33.** Procédé selon l'une quelconque des revendications précédentes, dans lequel le matériau se présente sous la forme d'un article d'optique ou ophtalmique.

**34.** Procédé selon la revendication 33, dans lequel l'article est une lentille de contact.

**35.** Procédé selon la revendication 34, dans lequel l'agent photochromique est incorporé au moins à une région optique centrale de la lentille.

**36.** Matériau hydrophile convenant à un traitement dans un procédé selon l'une quelconque des revendications précédentes, **caractérisé en ce qu'**il est obtenu par polymérisation d'une composition de base comprenant :

- de l'acide (méth)acrylique
- au moins un monomère hydrophile polymérisable par radicaux différent de l'acide (méth)acrylique
- au moins un monomère de (méth)acrylate ou de (méth)acrylamide portant un groupe hydrocarboné alicyclique.

**37.** Matériau hydrophile selon la revendication 36, dans lequel le au moins un monomère de (méth)acrylate ou de (méth)acrylamide portant un groupe hydrocarboné alicyclique a la formule suivante :

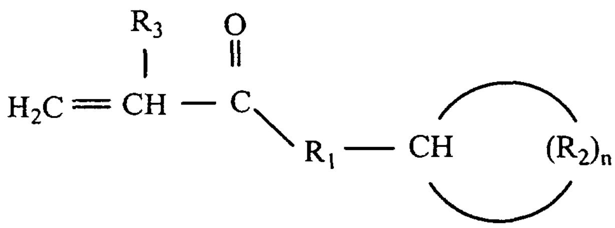

(A)

dans laquelle :

$R_1$ est O ou NH,
$R_2$ est un radical alkylène divalent choisi parmi les groupes $-CH_2-$, - CHOH- et $-CHR_4-$ où $R_4$ est un groupe alkyle en $C_1$-$C_8$,
$R_3$ est H ou $CH_3$ et dans lequel au moins un des radicaux $R_2$ est $CHR_4$
et n est égal à 4, 5, 6 ou 7.

**38.** Matériau hydrophile selon la revendication 36 ou 37, **caractérisé en ce qu'**il comprend un composé photochromique compris dans toute la masse dudit matériau hydrophile.